# EUROPÄISCHE PATENTSCHRIFT

(11) **EP 1 867 434 B1**
(45) Veröffentlichungstag und Bekanntmachung des Hinweises auf die Patenterteilung: **30.09.2009**
(21) Anmeldenummer: 07015634.4
(22) Anmeldetag: 13.12.2004
(51) Int. Cl.: B25B 5/06, F03G 1/00

(54) **Spann- und/oder Spreizwerkzeug mit Schrittgetriebe und einem Federantrieb zum kontinuierlichen Verlagern der beiden Spannbacken relativ zueinander**
Clamping or stretching tool with stepping gear and clockwork drive for continuous displacement of both clamping jaws relative to each other
Expenseur et/ou détendeur doté d'un mécanisme pas à pas et d'un entraînement par ressort destiné au déplacement continu des deux mâchoires de serrage l'une par rapport à l'autre

(30) Priorität: 12.12.2003 DE 10358301; 12.12.2003 DE 10358296; 12.12.2003 DE 10358302; 12.12.2003 DE 10358303; 12.12.2003 DE 10358304; 12.12.2003 DE 10358291
(43) Veröffentlichungstag der Anmeldung: 19.12.2007
(62) Teilanmeldung aus: 04803809.5
(73) Patentinhaber: Irwin Industrial Tools GmbH, 85399 Hallbergmoos (DE)
(72) Erfinder: Geier, Manfred, 82178 Puchheim (DE); Strauss, Ralf, 51588 Nümbrecht (DE); Reed, Phil, Sheffield South Yorkshire S6 3NU (GB)
(74) Vertreter: Schmid, Nils T.F.

(56) Entgegenhaltungen:
- EP-A- 0 655 298
- DE-A1- 2 413 816
- GB-A- 2 286 987
- US-A- 5 664 817
- US-A- 5 988 615
- US-B1- 6 568 667

## Beschreibung

Die Erfindung betrifft ein Spann- und/oder Spreizwerkzeug zum Verlagern einer Schub- oder Zugstange mit einer daran fest angebrachten beweglichen Backe relativ zu einem eine ortsfeste Backe haltenden Träger in Längsrichtung der Schub- oder Zugstange.

Es ist bekannt, insbesondere Spann- und/oder Spreizwerkzeuge mit einem Schrittgetriebe zu versehen, mit dem sowohl die bewegliche Backe zur ortsfesten Backe hin schrittweise annäherbar ist als auch die zwischen den Spannbacken hervorzurufenden Spannkräfte aufgebracht werden können. Ein derartiges Spann- und/oder Spreizwerkzeug ist aus der DE 3917473 bekannt, welche ein Schrittgetriebe mit einer ausreichend großen Schrittweite je Betätigungshub eines Antriebsarms des Schrittgetriebes aufweist, wobei mit relativ geringer Betätigungskraft Spannkräfte beim Verspannen eines zwischen den Spannbacken ergriffenen Gegenstands hervorgerufen werden können. Ein derartiges Spann- und/oder Spreizwerkzeug hat sich im alltäglichen Gebrauch sehr bewährt.

Das US-Patent 6,568,667 offenbart ein Spann- und/oder Spreizwerkzeug mit identischem Schrittgetriebe und einem zusätzlichen Schnellschließantrieb, der bei Betätigung einer Rückdrücksperre, welche eine Verlagerung der Schub- oder Zugstange entgegen der Vorschubrichtung des Schrittgetriebes verhindert, ein Schließen der Spannbacken, also eine Bewegung der beweglichen Backe auf die ortsfeste Backe zu, betreibt. Die Kraftmaschine des Schnellschließantriebs ist durch eine Spiraldruckfeder gebildet, die zwischen Abstützstellen auf einer der beweglichen Backe abgewandten Seite des Trägers wirkt. Nachteilig bei diesem Schnellschließmechanismus ist, dass ein hoher Platzbedarf erforderlich ist, um dem Schnellschließmechanismus den notwendigen Weg zur Entfaltung der gespeicherten Antriebskraft bereitzustellen. Die Duckfeder-Anordnung fordert einen langen Antriebsweg zur Entfaltung der Antriebskraft, so dass derartige Spann- und/oder Spreizwerkzeuge eine große axiale Ausdehnung haben und ein großes Gewicht in sich bergen, was die Handhabe des Spann- und/oder Spreizwerkzeugs unhandlich macht. Des Weiteren geht mit der Spiraldruckfeder eine nichtlineare Kraftabgabe einher, d.h. zu Beginn der Schließbewegung treten hohe Druckkräfte auf, die allmählich während der Schließbewegung abnehmen. Der bekannte Antrieb birgt vor allem eine Verletzungsgefahr wegen der explosionsartig schließenden beweglichen Backe in sich.

US 5,988,615 offenbart eine Einrichtung zum Befestigen eines Werkstücks an einen Rand eines flachen Trägers. Die Befestigungseinrichtung hat eine Spiralbandfeder, welche eine bewegliche Backe entlang einer Zugstange bewegen kann.

DE 24 13 816 offenbart eine Schraubzwinge mit einer parallel zur Längsstange angeordneten Zugfeder.

Aus GB 2 286 987 A ist eine Schraubzwinge bekannt, bei der eine Zugfeder in der beweglichen Backe untergebracht ist.

Es ist Aufgabe der Erfindung, die Nachteile des Standes der Technik zu überwinden, insbesondere einen Antrieb für ein Spann- und/oder Spreizwerkzeug zum insbesondere kontinuierlichen Verlagern einer Schub- oder Zugstange bereitzustellen, bei dem die Ergonomie eines Spann- und/oder Spreizwerkzeugs zu verbessern ist, insbesondere ein Antrieb für ein Spannoder Spreizwerkzeug zum insbesondere kontinuierlichen Verlagern der Schub- oder Zugstange bereitzustellen ist, wobei die räumliche Abmessung insbesondere in Längsrichtung sowie das Gewicht des Spann- und/oder Spreizwerkzeugs minimiert sind und eine gleichmäßige Schließbewegung mit insbesondere einer gleichmäßigen Schließkraft bereitgestellt ist.

Erfindungsgemäß ist eine Einrichtung zum Erzeugen einer Zugkraft zwischen der Schub- und der Zugstange und dem Träger vorgesehen. Mit der erfindungsgemäßen Maßnahme kann die Abmessung des Trägers sowie dessen Gehäuses genutzt werden, um einen Antriebsweg zur Freigabe von Antriebsenergie zu nutzen. Zusätzliche Antriebswege, wie bei dem bekannten Schnellschließmechanismus, sind nicht notwendig, so dass das erfindungsgemäße Spannoder Spreizwerkzeug nicht nur eine wesentlich geringere Abmessung sondern auch ein wesentlich geringeres Gewicht aufweist. Des Weiteren geben Zugeinrichtungen im Allgemeinen aufgrund ihrer Elastizität die Antriebskraft weniger abrupt ab, wodurch das Verletzungsrisiko reduziert ist.

Der geringe Platzbedarf wird durch eine eine Drehfeder, realisiert. Die Zugfeder hat Kraftangriffspunkte sowohl am Träger als auch an der Schub- oder Zugstange oder an der beweglichen Backe.

Um insbesondere große Gegenstände zwischen den Spannbacken einklemmen zu können, ist die Zugfeder an der Schub- oder Zugstange oder an der beweglichen Backe lösbar befestigt, um an einer mehr zum Träger hin positionierten Stellung umgesetzt und wieder befestigt zu werden. Auf diese Weise können Zugfedern kurzer Zugstrecken herangezogen werden.

Bei einer bevorzugten Ausführung ist die Einrichtung zur Erzeugung einer Zugkraft, insbesondere eine Drehfeder, mit einem wickelbaren Kraftübertragungselement gekoppelt. Das wickelbare Kraftübertragungselement, wie ein Wickelstrang, ist an seinem freien Ende mit der Schub- oder Zugstange oder der beweglichen Backe fest verbunden. Beim Zuziehen der beweglichen Backe wickelt die Drehfeder den Wickelstrang an einer Wickelspule auf.

Bei einer bevorzugten Ausführung der Erfindung ist eine Wickelaufnahme, die oben erwähnte Wickelspule, kraftübertragend mit der Einrichtung zur Erzeugung einer Zugkraft gekoppelt. Die Wickelaufnahme ist insbesondere am Träger ortsfest gelagert.

Bei einer Ausführung der Erfindung ist die Einrichtung zur Erzeugung einer Zugkraft eine gewickelte Spiralbandfeder. Die Spiralbandfeder kennzeichnet sich durch eine gleichmäßige lineare Zugkraftabgabe unabhängig von dem Grad der Abwicklung aus. Die Spiralbandfeder hat einen Spiralbandträger , der drehbar an dem Träger gelagert ist.

Bei einer Weiterbildung der Erfindung ist die Schub- oder Zugstange mit einer Aufnahme für einen abgewickelten Bandabschnitt der Spiralbandfeder versehen. Dabei ist die Aufnahme derart tief, daß das abgewickelte Spiralband mit Spiel zwischen der Schub- oder Zugstange und dem Träger liegen kann. Im abgewickelten Zustand ist die gespeicherte Antriebszugenergie in der Spiralbandfeder gespeichert.

Bei einer bevorzugten Ausführung der Erfindung ist der erfindungsgemäße Antrieb mit einem Schrittgetriebe versehen, das kleine Verlagerungswege erzeugt und damit hohe Spannkräfte zwischen den Spannbacken aufbringen kann. Das Schrittgetriebe ist einem von der Zugeinrichtung unabhängigen Antrieb zugeordnet, der durch die Betätigung eines Antriebsarms von einer Bedienperson betrieben wird. Der Antriebsarm wird derart ausgelegt, daß er über einen gegen eine Rückstellfeder verlagerbaren Mitnehmer hebelkraftübertragsgemäß auf die Schub-oder Zugstange in Eingriff bringbar ist, und ein Träger auf einer den Backen zugewandten Spannseite der Schub- oder Zugstange schwenkbar angelenkt ist.

Mit dem erfindungsgemäßen Antrieb zum Schnellverschließen der beweglichen Spannbacke in Kombination mit dem Schrittgetriebe ist tatsächlich eine Einhandzwinge realisiert, welche ein schnelles Greifen mit dem Schnellschlußmechanismus sowie ein Aufbringen hoher Spannkräfte bei geringem Krafteinsatz realisiert.

Der Antriebsarm des Schrittgetriebes weist ein Schwenklager auf, das im Verlauf der Längsrichtung der Schub- oder Zugstange im wesentlichen auf der Höhe des Mitnehmers liegt, wobei insbesondere der Antriebsarm einen permanenten ortsfesten Schwenklagerpunkt aufweist. Das Schwenklager und eine Krafteintragsstelle des Antriebsarms in dem Mitnehmer sind im wesentlichen in einer Ebene angeordnet, zu welcher die Schub- oder Zugstange als Ebenennormale liegt. Der Antriebsarm weist insbesondere einen ersten Abschnitt mit einem Wirkhebel, der durch den Abstand des Schwenklagers zum Krafteintragspunkt definiert ist, und einen zweiten Abschnitt auf, an dem ein Operator den Antriebsarm betätigt. Insbesondere umfaßt das Schrittgetriebe eine Rückstellfeder, die nach Lösen einer Betätigungskraft zum Verbringen des Antriebsarms von dessen Betätigungsstellen in eine Ausgangsstelle ausgelegt ist, in welcher der Antriebsarm für einen vollständigen Betätigungshub betätigbar ist. Außerdem weist das Schrittgetriebe eine Dauerverkantung des Mitnehmers auf, bei der insbesondere eine Rückstellfeder derart auf den Mitnehmer einwirkt, daß er im unbetätigten Betriebszustand des Antriebsarm gegen einen Anschlag am Antriebsarm gedrängt an der Schub- oder Zugstange verkantend anliegt.

Eine Einrichtung zum Lösen einer Dauerverkantung des Mitnehmers ist insbesondere ebenfalls vorgesehen, wobei die Einrichtung zum Lösen der Verkantung eines Mitnehmers über eine eine Verlagerung der Schub- oder Zugstange entgegen der Vorschubrichtung des Schrittgetriebes verhindernde Sperre bedienbar ist.

Des weiteren kann die Erfindung abhängig von den oben genannten Erfindungsgegenständen ein Spann- und/oder Spreizwerkzeug, bei dem die Ergonomie zu verbessern und insbesondere eine bediensichere und einfache Handhabe gewährleistet ist, wobei eine Beeinträchtigung des zu spannenden Gegenstands durch Kräfte, die von dem Antrieb auf den Gegenstand wirken, weitestgehend ausgeschlossen sein sollen.

Vorzugsweise ist eine Einrichtung zum Dämpfen einer von der Kraftmaschine abgegebenen Kraft zum Verlagern der Schub- oder Zugstange an jeder Stelle des Verlagerungsweges der Schub- oder Zugstange auf die Kraftmaschine vorgesehen. Mit der Dämpfungseinrichtung, welche die von der Kraftmaschine abgebbare Antriebskraft schwächen kann, kann insbesondere eine gleichmäßige Verlagerung der beweglichen Backe realisiert sein, wobei die Verlagerungsgeschwindigkeit für eine einfache Dosierung und ein schonendes Greifen des zu spannenden Gegenstands einstellbar ist. Des weiteren kann die erfindungsgemäße Anordnung mit Kraftmaschine und Dämpfungseinrichtung das Verletzungsrisiko bei der Handhabe des Spann- und/oder Spreizwerkzeugs minimieren.

Eine besonders einfache und vorteilhafte Ergonomie wird dem Spann- und/oder Spreizwerkzeug verliehen, wenn die Verlagerungsgeschwindigkeit an jeder Stelle des Verlagerungswegs gleich groß ist. Diese gleichmäßige Verlagerungsgeschwindigkeit kann dadurch realisiert werden, daß die Dämpfungseinrichtung speziell auf die in dem Spann- und/oder Spreizwerkzeug unterzubringende Kraftmaschine abgestimmt ist. Bei der Verwendung einer Druckspiralfeder sind die Federkonstanten in Abhängigkeit von dem Federweg ermittelbar, so daß eine daraufhin eingestellte Dämpfungseinrichtung der Druckspiralfeder zugeordnet werden kann.

Bei einer besonderen Ausführung der Erfindung sind die Dämpfungseinrichtung sowie die Kraftmaschine in einer einzigen Baueinheit, insbesondere einem einzigen Bauteil, kombiniert. Beispielsweise könnte als derartiges Bauteil Drehfedertypen, insbesondere eine Spiralbandfeder, in Betracht kommen, welche eine gleichmäßige Antriebskraft unabhängig von dem Federweg abgeben können. Während durch die elastische Verformbarkeit der Drehfeder beim Spannen, also Abwickeln der Drehfeder, eine Kraft zur Wiedergewinnung der ursprünglich gewickelten Ausgangsform nutzbar ist, liefern die Materialverformung sowie die Drehreibung der Drehfeder um ihre Trägerbasis die Dämpfungsfunktion.

Bei einer besonderen Weiterbildung der Erfindung ist die Dämpfungseinrichtung als Kolbenzylinder-Anordnung mit einem Dämpfungsfluid gebildet. Dabei kann der Kolben der Dämpfungseinrichtung an der Schub- oder Zugstange befestigt sein, während der Zylinder der Dämpfungseinrichtung dem Träger ortsfest zugeordnet ist.

Bei einer bevorzugten Ausführung der Erfindung ist die Dämpfungseinrichtung als ein drehantreibbares Getriebeelement, das betriebsmäßig auf die Kraftmaschine oder die Schub- oder Zugstange wirkt. Das Getriebeelement kann als drehantreibbares Dämpfungsteil ausgebildet sein, das in einem in einem Gehäuse enthaltenen Dämpfungsfluid, insbesondere einer Dämpfungsflüssigkeit, dämpfend arbeitet, insbesondere panscht.

Der Dämpfungseinrichtung kann ihre Dämpfungseigenschaft durch die Erzeugung von Reibungsverlusten erzielen. Erfindungsgemäß kann auch vorgeschlagen sein, daß die Dämpfungseinrichtung Panschverluste erzeugt.

Ein weiterer von dem oben genannten Erfindungsgegenstand abhängiger Erfindungsaspekt betrifft ein Spann- und/oder Spreizwerkzeug, bei dem der Bedienperson in jeder Betriebskonfiguration des Spann- und/oder Spreizwerkzeugs eine ausreichend große Antriebsenergie zum Durchführen von Verlagerungen der Schub- oder Zugstange zur Verfügung gestellt wird.

Vorzugsweise ist ein Mechanismus zum Laden von Antriebsenergie vorgesehen, der unabhängig von dem Verlagerungsbetrieb der Schub- oder Zugstange ladbar ist. Benötigt eine Bedienperson eine Antriebsenergie, obwohl der Speicher für Antriebsenergie leer oder annähernd leer ist, also die Spiraldruckfeder bereits entspannt ist, kann durch die erfindungsgemä-βe Maßnahme eine erneute Antriebsenergie dem Antrieb zur Verfügung gestellt werden, ohne die Stellung der beweglichen Spannbacke zur ortsfesten Backe zu verändern, also ohne den Betriebszustand des Spann- und/oder Spreizwerkzeugs verändern zu müssen. Auf diese Weise wird die funktionale Flexibilität des Spann- und/oder Spreizwerkzeugs für die Bedienperson erheblich verbessert. Das Laden kann beispielsweise vor dem Einsatz des Spann- und/oder Spreizwerkzeugs durchgeführt werden und dann im Einsatzfall genutzt werden. Erfindungsgemäß ist außerdem als Antrieb eine Drehfeder vorgesehen, die selbst den Speicher für die Antriebsenergie bildet. Im gespannten Zustand der Drehfeder ist der Energiespeicher geladen.

Die Drehfeder eignet sich insbesondere als Speicher für Antriebsenergie, weil die Drehfeder ihre Antriebskraft in Form einer Drehbewegung abgeben kann, also keine translatorische Entfaltungsbewegung benötigt, welche einen hohen Platzbedarf nach sich zieht, wie es bei dem bekannten Spann- und/oder Spreizwerkzeug des US-Patents 6,568,667 der Fall ist.

Die Drehfeder kann zur automatischen Freigabe ihrer Antriebsenergie blockiert werden, wobei sie zum Verdrehen entgegen der Drehantriebsrichtung über eine Betätigungseinrichtung verdrehbar gelagert ist. Als Einrichtung zum Sperren der Vergabe der Antriebsenergie kann eine Klinkeneingriffseinrichtung vorgesehen sein. Über die Betätigungseinrichtung kann die Drehfeder von außen manuell durch die Bedienperson gedreht werden und somit geladen werden.

Die Betätigungseinrichtung kann auch so ausgeführt sein, daß sie neben der manuellen Ladebewegung das Lösen der Sperreinrichtung bewirken kann.

Ein weiterer abhängiger Erfindungsaspekt betrifft ein Spann- und/oder Spreizwerkzeug, bei dem die Ergonomie zu verbessern ist, insbesondere die Funktionsweise für eine einhändige Bedienbarkeit des Spann- und/oder Spreizwerkzeugs erweitert ist und Antriebsenergie in annähernd allen Betriebsstellungen des Spann- und/oder Spreizwerkzeugs zur Verfügung gestellt ist.

Vorzugsweise ist ein Mechanismus dazu ausgelegt, Antriebsenergie in den Speicher bei einer Verlagerung der Schub- oder Zugstange nicht nur in deren Schließrichtung zu laden, - als Schließrichtung ist die Richtung zu verstehen ist, bei der sich im Falle der Spannkonfiguration des Spann- und/oder Spreizwerkzeugs die bewegliche Backe auf die ortsfeste Backe zubewegt; genauso ist unter Schließrichtung diejenige Richtung zu verstehen, bei der im Falle einer Spreizkonfiguration des Spann- und/oder Spreizwerkzeugs die bewegliche Backe von der ortsfesten Backe entfernt wird - sondern auch in die der Schließrichtung entgegengesetzten Öffnungsrichtung.

Mit der erfindungsgemäßen Maßnahme wird gewährleistet, daß der Bedienperson nicht nur Antriebsenergie zur Verfügung steht, wenn sich die bewegliche Spannbacke in einer gegenüber der ortsfesten Backe geöffneten Position befindet, sondern auch dann, wenn sie an der ortsfesten Backe anliegt. Mit der Zurverfügungstellung von Antriebsenergie in jeder Betriebsstellung und -konfiguration des Spann- und/oder Spreizwerkzeugs wird eine Bedienbarkeit für letzteres bereitgestellt, die ein einhändiges Betätigen des Spann- und/oder Spreizwerkzeugs sowohl zum Greifen des zu spannenden Gegenstands als auch zum Aufbringen von hohen Spannkräften auf den zu spannenden Gegenstand als auch zum Lösen des zu spannenden Gegenstands als auch zum Öffnen und Freigeben des zu spannenden Gegenstands als auch zum Verbringen der beweglichen Backe in eine Ausgangsstellung, in der das Spann-und/oder Spreizwerkzeug für einen erneuten Einsatz, insbesondere zum Spannen eines neuen Gegenstands, bereit ist.

Des weiteren läßt die erfindungsgemäße Maßnahme zu, Antriebsenergie nicht nur für einen Schnellschlußmechanismus sondern auch für einen schnellen Öffnungsmechanismus der Spannbacken zur Verfügung zu stellen. Sollten für die beiden unterschiedlichen Verlagerungsrichtungen unterschiedliche Antriebe eingesetzt werden, kann der Lademechanismus derart ausgestaltet sein, daß ein Speicher für den ersten Antrieb beim Schließen der Spannbacken und ein Speicher des anderen Antriebs beim Öffnen der Spannbacken mit Energie geladen werden.

Bei einer bevorzugten Ausführung der Erfindung umfaßt der Lademechanismus ein drehbar angetriebenes Getriebeelement. Dem Getriebeelement wird das erforderliche Drehmoment zum Ladevorgang beispielsweise dadurch mitgeteilt, daß ein reib- oder formschlüssiger Kontakt, insbesondere Abrollkontakt, zwischen der Schub- oder Zugstange und dem Getriebeelement hergestellt wird. Das Getriebeelement ist mit einer Drehfeder derart gekoppelt, daß durch die Drehbewegung des Getriebeelements die Kraftmaschine gespannt wird. Bei einer als Drehfeder ausgebildeten Kraftmaschine ist der Speicher für Antriebsenergie sowie eine Einrichtung zum Umwandeln der Drehbewegung des Getriebeelements in Drehantriebsenergie in einem Bauteil integriert.

Bei einer bevorzugten Ausführung ist für den Antrieb in beide Verlagerungsrichtungen nur eine Kraftmaschine insbesondere in Form einer Drehfeder vorgesehen. Um den Ladevorgang durch den Lademechanismus in beide Verlagerungsrichtungen sicherzustellen, ist bei einer Weiterbildung der Erfindung ein Drehrichtungswechsler vorgesehen, der bei einem Wechsel der Verlagerungsrichtung der Schub- oder Zugstange die Drehbewegung des Getriebeelements in eine für die Einrichtung zum Umwandeln der Drehbewegung erforderliche Drehladebewegung ändert. Dies beispielsweise kann dadurch realisiert werden, daß zwischen dem drehantreibbaren Getriebeelement und der Schub- oder Zugstange ein Zwischengetriebeelement vorgesehen ist, welches über einen Schaltmechanismus in Eingriff zwischen der Schub-oder Zugstange und dem Getriebeelement bringbar ist, was einen Drehrichtungswechsel bewirkt.

Bei der Weiterbildung der Erfindung ist der Drehrichtungswechsler, insbesondere die Schaltung zum Bringen eines Zwischengetriebeelements in Eingriff mit dem Getriebeelement, manuell betätigbar.

Bei einer bevorzugten Weiterbildung der Erfindung ist der Drehrichtungswechsler automatisch ausgeführt, d. h. dieser wird dann aktiviert, wenn die Verlagerungsrichtung der Schub-oder Zugstange beispielsweise durch Aufbringen von einer externen Druck- oder Zugkraft an der Schub- oder Zugstange gewechselt wird.

Bei einer Weiterbildung des erfindungsgemäßen Lademechanismus ist eine Energiefreigabeblockade vorgesehen. Diese ist während des Ladevorgangs aktiviert, damit die in den Speicher eingebrachte Antriebsenergie nicht freigegeben wird und zu dem Zeitpunkt von der Bedienperson freigebbar ist, wenn die Antriebsenergie benötigt wird.

Die Energiefreigabeblockade kann vorzugsweise manuell von der Bedienperson gelöst werden.

In einer besonderen Ausführung der Energiefreigabeblockade ist eine Klinkensperranordnung vorgesehen, welche eine Antriebsbewegung einer Drehfeder blockiert, insbesondere in Eingriff mit dem Getriebeelement oder der Drehfeder kommen kann.

Bei einer Weiterbildung der Erfindung kann zusätzlich ein drehantreibbares Antriebsrad vorgesehen sein, das mit der Schub- oder Zugstange zu deren Verlagerung zusammenwirkt. Das drehantreibbare Antriebsrad bedarf keines sich in einer Längsrichtung des Schub- oder Zugstange erstreckenden Antriebs- oder Beschleunigungsweges, weswegen die axiale Ausdehnung des erfindungsgemäßen Spann- und/oder Spreizwerkzeugs gegenüber den bekannten Spann- und/oder Spreizwerkzeugen mit entsprechender Funktionsweise deutlich reduziert ist. Die geringen Abmessungen bewirken nicht nur eine Reduzierung des Gewichts, sondern verbessern auch die Hantierbarkeit mit dem Spann- und/oder Spreizwerkzeug dahingehend, daß keine weit über den Träger vorstehenden Schub- oder Zugstangenabschnitte ein Bedienen des Spann- und/oder Spreizwerkzeugs, insbesondere eines Schrittgetriebes, behindern. Insbesondere bei beengten Einsatzräumen, in welchen ein Spann- oder Spreizwerkzeug eingesetzt werden soll und eine Handhabe des Schrittgetriebes beschränkt ist, kann das erfindungsgemäße Spann- und/oder Spreizwerkzeug wesentlich einfacher als die bekannten bedient werden. Während der bekannte Schnellverschlußmechanismus mit Schraubendruckfeder auch eine Verletzungsgefahr für die Bedienperson dahingehend in sich birgt, daß Körperteile zwischen den Spiralwindungen eingeklemmt werden können und die Antriebskräfte explosionsartig abgegeben werden, können mit der erfindungsgemäßen Maßnahme derartige Gefahrenpotentiale ausgeräumt werden. Gemäß der Erfindung ist das Antriebsrad mit einer Drehfeder für einen Rotationsantrieb betriebsmäßig gekoppelt. Die Drehfeder ist eine mechanische Kraftmaschine mit mechanischem Energiespeicher. Diese mechanische Kraftmaschine ist gegenüber einer elektrischen Alternative dahingehend vorteilhaft, daß sie von einer elektrischen Energieversorgung unabhängig ist. Das von der Drehfeder angetriebene Rad ist erfindungsgemäß mit der Schub- oder Zugstange zu deren Verlagerung in drehmomentübertragenden Eingriff bringbar. Das Antriebsrad kann in drehübertragenden Eingriff mit der Schub- oder Zugstange gebracht werden.

Vorzugsweise ist das Antriebsrad direkt mit der Schub- oder Zugstange berührend angeordnet insbesondere für einen reib- oder kraftschlüssigen Eingriff, so daß zur Übertragung des Drehmoments von dem Antriebsrad letzteres an der Schub- oder Zugstange abrollt. Das Antriebsrad ist derart der Schub- oder Zugstange zugeordnet, daß betriebsmäßig die Drehbewegung des Antriebsrads in eine translatorische Bewegung für die Schub- oder Zugstange umgewandelt werden kann. Bei dieser Ausführung des Getriebeelements als Antriebsrad ist eine Drehfeder als Motor heranziehbar, welche insbesondere eine einzige Drehantriebsrichtung aufweist. Um eine Verlagerung der Schub- oder Zugstange in beide Längsrichtungen der Schub- oder Zugstange zu gewährleisten, ist eine entsprechende Getriebeanordnung zwischen der Drehfeder und dem die Drehbewegung in eine translatorische Bewegung umwandelnden Bauteil zwischenzuschalten. Bei der Verwendung eines Elektromotors kann die Verlagerung in beide Längsrichtungen der Schub- oder Zugstange einfach durch Umkehr der Drehrichtung mittels Umpolung des Elektromotors realisiert werden. Vorzugweise rollt das Antriebsrad derart an der Schub- oder Zugstange ab, daß die Schub- oder Zugstange in einer im wesentlichen rotationsfreien, also reinen Translationsbewegung verlagert wird.

Bei einer bevorzugten Ausführung des erfindungsgemäßen Antriebs als Drehfedermotor ist ein Mechanismus zum Wechseln der Verlagerungsrichtung der Schub- oder Zugstange vorgesehen. Der Wechsel kann dabei von einer Schließverlagerung in eine Öffnungsverlagerung und/oder umgekehrt von statten gehen. Vorzugsweise weist der Mechanismus einen Drehrichtungswechsler auf, der dazu ausgelegt ist, das der Schub- oder Zugstange von dem Getriebeelement mitgeteilte Drehmoment umzukehren.

Bei einer besonderen Ausführung des Drehrichtungswechslers ist ein Getriebebauteil zum Umsetzen einer Drehbewegung in eine vorzugsweise rein translatorische Bewegung zwischen dem Getriebeelement und der Schub- oder Zugstange angeordnet. Das drehantreibbare Getriebebauteil ist in einen und aus einem drehmomentübertragbaren Eingriff mit dem Antriebsrad bringbar. Bei der Getriebekonfiguration für einen drehmomentübertragbaren Eingriff ist eine Verlagerung der Schub- oder Zugstange in einer Richtung möglich, während in einer den Eingriff mit dem Getriebeelement freigebenden Position des Getriebebauteils eine entgegengesetzte Verlagerungsrichtung bereitgestellt ist. Der Wechsel des Getriebebauteils von einer aktiven Stellung zum Umsetzen der Drehbewegung in eine translatorische Bewegung in eine passive, drehbewegungsumsetzfreie Stellung und umgekehrt, kann manuell durch die Bedienperson durchgeführt werden.

Bei einer besonderen Ausführung des Mechanismus' zum Wechseln der Verlagerungsrichtung ist ein Zwischengetriebeelement vorgesehen, das mit dem Antriebsrad und dem Getriebebauteil betriebsmäßig koppelbar ist. Diese Koppelung ist wechselseitig ausschließlich. Beispielsweise treibt bei einer ersten Getriebekonfiguration für eine erste Verlagerungsrichtung das Antriebsrad das Getriebebauteil über das Zwischengetriebeelement an. Bei einer zweiten Getriebekonfiguration treibt das Antriebsrad das Getriebebauteil direkt ohne Zwischenschaltung des Getriebeelements an.

Vorzugsweise ist das Zwischengetriebeelement mit dem Antriebsrad und/oder dem Getriebebauteil in form- oder kraftschlüssigen Eingriff, insbesondere in Abrolleingriff, bringbar. Dabei können ein Reibungskontakt oder eine Verzahnungsverbindung herangezogen werden.

Bei einer Weiterbildung der Erfindung ist der Mechanismus zum Wechseln der Verlagerungsrichtung mit einer insbesondere von der das Spann und/oder Spreizwerkzeugzeugs bedienenden Person manuell betätigbaren Schaltung zum Wählen der Verlagerungsrichtung versehen. Die Schaltung kann insbesondere durch einen Schalthebel ausgebildet sein, über den der Drehrichtungswechsler aktiviert und/oder deaktiviert wird.

Insbesondere bei einem Spann- und/oder Spreizwerkzeug bekannter Bauart mit Schrittgetriebe und Rückdrücksperre zum Verhindern einer Verlagerung der Schub- oder Zugstange entgegen der Vorschubrichtung des Schrittgetriebes kann erfindungsgemäß die Rückdrücksperre als Betätigungselement der Schaltung herangezogen werden.

Das Betätigungselement umfaßt eine insbesondere unbetätigte Sperrstellung zum Verhindern einer Verlagerung der Schub- oder Zugstange in Schließ und/oder Öffnungsrichtung. Bei der Ausführung des Betätigungselements durch die Rückdrücksperre eines Schrittgetriebes ist die Sperrstellung durch eine unbetätigte Stellung der Rückdrücksperre gebildet. Zum einen ist eine Verlagerung der Schub- oder Zugstange funktionsbedingt entgegen der Vorschubrichtung des Schrittgetriebes, also zum Öffnen der Spannbacken, blockiert.

Das Betätigungselement kann eine erste Freigabestellung zum Freigeben einer Drehbewegung für eine erste Verlagerungsrichtung aufweisen. Insbesondere bei der Rückdrücksperre als Betätigungselement kann diese erste Freigabestellung dadurch realisiert werden, daß der Hebel der Rückdrücksperre leicht betätigt wird, insbesondere in eine Zwischenstellung, in der die Sperrfunktion aufgehoben ist und eine Verlagerung der Schub- oder Zugstange entgegen der Vorschubrichtung des Schrittgetriebes ermöglicht ist.

Des weiteren kann das Betätigungselement eine zweite Freigabestellung, insbesondere eine End- oder Anschlagsstellung, zum Freigeben einer Drehbewegung für eine zweite Verlagerungsrichtung aufweisen. Insbesondere bei der Rückdrücksperre als Betätigungselement kann diese zweite Freigabestellung dadurch erreicht werden, daß der Hebel der Rückdrücksperre vollständig betätigt oder durchgedrückt wird, also bis zu einem Anschlag, wodurch beispielsweise der oben genannte Drehrichtungswechsler aktivierbar ist, so daß eine Verlagerung der Schub- oder Zugstange entgegengesetzt zur ersten Verlagerungsrichtung, also beispielsweise zum Öffnen der Spannbacken, realisiert ist.

Insbesondere bei einem Mechanismus zum Wechseln der Verlagerungsrichtung mit Getriebebauteil und Zwischengetriebeelement kann ein Stellorgan vorgesehen sein, das entweder das Getriebebauteil oder das Zwischengetriebeelement derart stellt, daß eines von beiden in einen oder aus einem form- oder kraftschlüssigen, insbesondere abrollenden, Eingriff mit dem Antriebsrad gebracht wird.

Weitere Vorteile, Merkmale und Eigenschaften der Erfindung werden durch die folgende Beschreibung bevorzugter Ausführungen der Erfindung anhand der beiliegenden Zeichnungen deutlich, in denen zeigen:
- Figur 1a: eine Seitenansicht einer Ausführung eines Spann- und/oder Spreizwerkzeugs mit einer geöffneten Spannbackenstellung;
- Figur 1b: eine Querschnittsansicht des Spann- und/oder Spreizwerkzeugs gemäß Figur 1a entlang der Schnittlinie A-A;
- Figur 2: eine Seitenansicht einer weiteren Ausführung eines Spann-und/oder Spreizwerkzeugs mit geöffneter Spannbackenstellung, wobei ein Antrieb in seinem Antriebsbetrieb zum Öffnen der Spann-backen gezeigt ist;
- Figur 3: eine Seitenansicht des Spann- und/oder Spreizwerkzeugs gemäß Figur 2, wobei der Antrieb in seinem Antriebsbetrieb zum Schließen der Spannbacken gezeigt ist;
- Figur 4: eine Seitenansicht des Spann- und/oder Spreizwerkzeugs gemäß Figur 2 mit einem deaktivierten Antrieb, wobei ein Mechanismus zum Laden von Antriebsenergie bei einer Schließbewegung der Backen gezeigt ist;
- Figur 5: eine Seitenansicht des Spann- und/oder Spreizwerkzeugs gemäß Figur 2 mit einem deaktivierten Antrieb, wobei der Mechanismus zum Laden von Antriebsenergie bei einer Öffnungsbewegung der Spannbacken gezeigt ist;
- Figur 6a: eine Seitenansicht einer weiteren Ausführung eines Spann-und/oder Spreizwerkzeugs mit Spannbacken im einspannenden Zustand;
- Figur 6b: eine Stirnansicht des Spann- und/oder Spreizwerkzeugs gemäß Figur 6a;
- Figur 7a: eine Seitenansicht der Ausführung des Spann- und/oder Spreizwerkzeugs gemäß Figuren 6a, 6b mit einer geöffneten Spannbackenkonfiguration;
- Figur 7b: eine Querschnittsansicht des Spann- und/oder Spreizwerkzeugs gemäß Figur 7a entlang der Schnittlinie B-B;
- Figur 8a: eine Seitenansicht des Spann- und/oder Spreizwerkzeugs gemäß den Figuren 6a bis 7b in einem Betriebsmodus des Schließens der Spannbacken;
- Figur 8b: eine Stirnansicht des Spann- und/oder Spreizwerkzeugs gemäß Figur 8a;
- Figur 9a: eine Seitenansicht einer erfindungsgemäßen Ausführung eines Spann-und/oder Spreizwerkzeugs mit einer geöffneten Spannbackenkonfiguration;
- Figur 9b: eine Draufsicht des Spann- und/oder Spreizwerkzeugs gemäß Figur 9a;
- Figur 9c: eine vergrößerte Detailansicht des Bereichs C gemäß Figur 9b;
- Figur 9d: eine Stirnansicht des Spann- und/oder Spreizwerkzeugs gemäß Figur 9a.

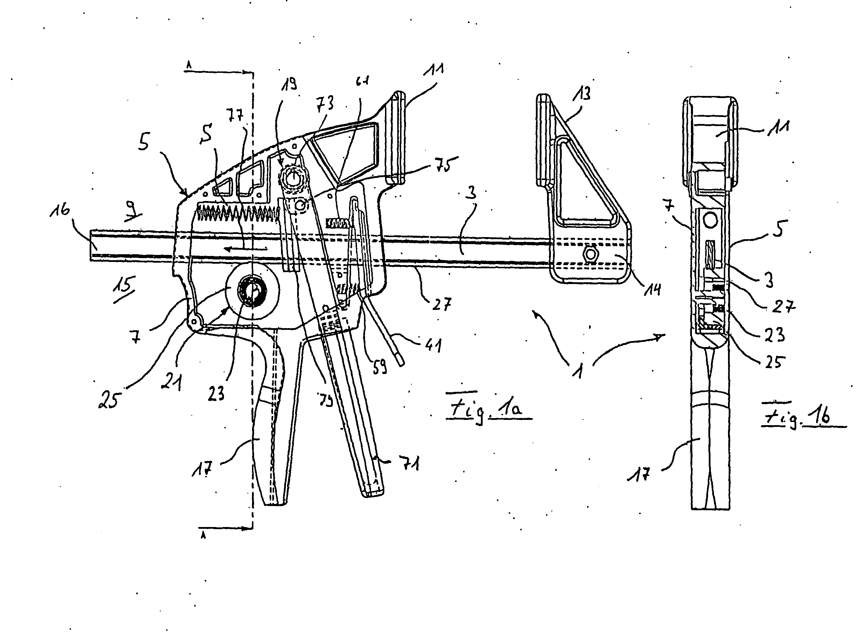

Die in den Figuren 1a und 1b dargestellte Ausführung eines Spann- und/oder Spreizwerkzeugs 1 umfaßt eine Schub- oder Zugstange 3, die an einem Träger 5 in deren Längsrichtung beweglich gelagert ist. Der Träger 5 umfaßt ein geschlossenes Gehäuse 7, wobei auf einer Spannseite 9 der Schub- oder Zugstange 3 eine feste Spannbacke 11 vorgesehen ist, die einer beweglichen Spannbacke 13 diametral gegenüberliegt, welche an einem Ende 14 der Schub- oder Zugstange 3 lösbar befestigt ist.

In Figur 1a ist der Spannbetriebsmodus des Spann- und/oder Spreizwerkzeugs 1 dargestellt. Ist die bewegliche Backe 13 an dem gegenüberliegenden Ende 16 der Schub- oder Zugstange 3 befestigt, besitzt das Spann- und/oder Spreizwerkzeugs 1 einen Spreizbetriebsmodus.

Auf der der Spannseite 9 gegenüberliegenden Betätigungsseite 15 der Zug- oder Schubstange 3 ist an dem Träger 5 ein Griff 17 zum Halten des Spann- und/oder Spreizwerkzeugs mit einer Hand einstückig befestigt. Zudem ist an dem Träger 5 ein Schrittgetriebe 19 gelagert, das später im Detail erläutert wird. Das Gehäuse 7 des Trägers 5 umfaßt und schützt einen erfindungsgemäßen Antrieb 21, der durch eine Drehfeder 23, die eine Rotationsachse aufweist, und ein drehbar gelagertes Antriebsrad 25 gebildet ist, dessen Drehachse mit der Rotationsachse der Drehfeder 23 zusammenfällt.

Das Antriebsrad 25 steht kraftübertragend mit einem Längsrand 27 der Schub- oder Zugstange 3 im Eingriff. In Figur 1a ist der drehmomentübertragende Eingriff durch Reibungsschluß zwischen Antriebsrad 5 und Schub- oder Zugstange 3 gebildet.

Das Antriebsrad 25 ist derart an dem Träger 5 gelagert, daß in jeder Verlagerungsposition der Schub- oder Zugstange 3 ein Eingriff des Antriebsrads 25 mit der Schub- oder Zugstange 3 gewährleistet ist. Das Antriebsrad 25 ist aus einem Gummi enthaltenden Werkstoff gebildet, wobei die Schub- oder Zugstange 3 zum Antriebsrad 25 derart liegt, daß eine eine Normalkraft erzeugende Vorspannung zwischen den beiden Bauteilen wirkt.

Mit dieser Ausführung eines drehantreibbaren Getriebeelements in Form eines Antriebsrads 25 und einer Drehfeder 23 als Motor und Energiespeicher wird der Schub- oder Zugstange 3 in jeder ihrer Verlagerungspositionen eine Antriebskraft zum Schließen der Spannbacken 11, 13 mitgeteilt, also eine Antriebskraft zum Bewegen der Schub- oder Zugstange 3 von rechts nach links, wie in Figur 1 a durch den Pfeil S, wie Schließrichtung, angezeigt ist.

Aufgrund des ständigen Eingriffs des Antriebsrads 25 mit der Schub- oder Zugstange 3 ist weiterhin gewährleistet, daß bei einer Öffnungsbewegung der Spannbacke 13, d.h. bei einer Bewegung der Schub- oder Zugstange 3 von links nach rechts, die Drehfeder 23 gespannt wird, um für den anschließenden Öffnungsvorgang ausreichende potentielle Energie zum erneuten Öffnen des Spann- und/oder Spreizwerkzeugs 1 bereitzustellen.

Eine Drehfeder 23 als Kraftmaschine ist insofern von Vorteil, als sie für eine im wesentlichen kontinuierliche Drehmoment-Bereitstellung sorgt, so daß ein kontinuierlicher Schließvorgang mit gleichmäßiger Schließkraft und Schließgeschwindigkeit bereitgestellt ist.

Die Reibungskraft, welche zur Übertragung des Drehmoments von dem Antriebsrad 25 auf die Schub- oder Zugstange 3 notwendig ist, ist derart insbesondere durch Wahl eines hohen Reibungskoeffizienten einzustellen, daß es bei einem Stillstand der Schub- oder Zugstange 3 nicht zu einem Durchdrehen des Antriebsrads 25 kommt. Auf diese Weise ist gewährleistet, daß sich die potentielle Energie der Drehfeder 23 nicht selbständig durch Durchrutschen des Antriebsrads 25 löst.

Das anhand der Figuren 1a und 1b beschriebene Spann- und/oder Spreizwerkzeug weist explizit keinen Mechanismus zum Laden eines Energiespeichers beim Schließen der beweglichen Spannbacke auf, allerdings soll hiermit verdeutlicht werden, daß der erfindungsgemäße Mechanismus zum Laden des Energiespeichers beim Schließen des Spann- und/oder Spreizwerkzeugs mit den oben ausgebildeten Spann- und/oder Spreizwerkzeugs kombiniert werden kann.

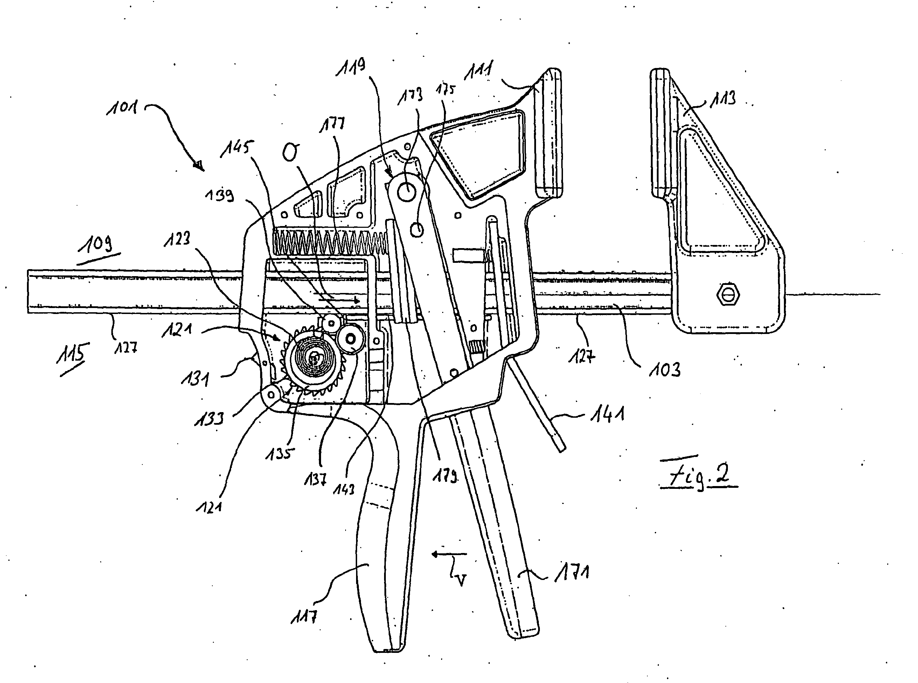

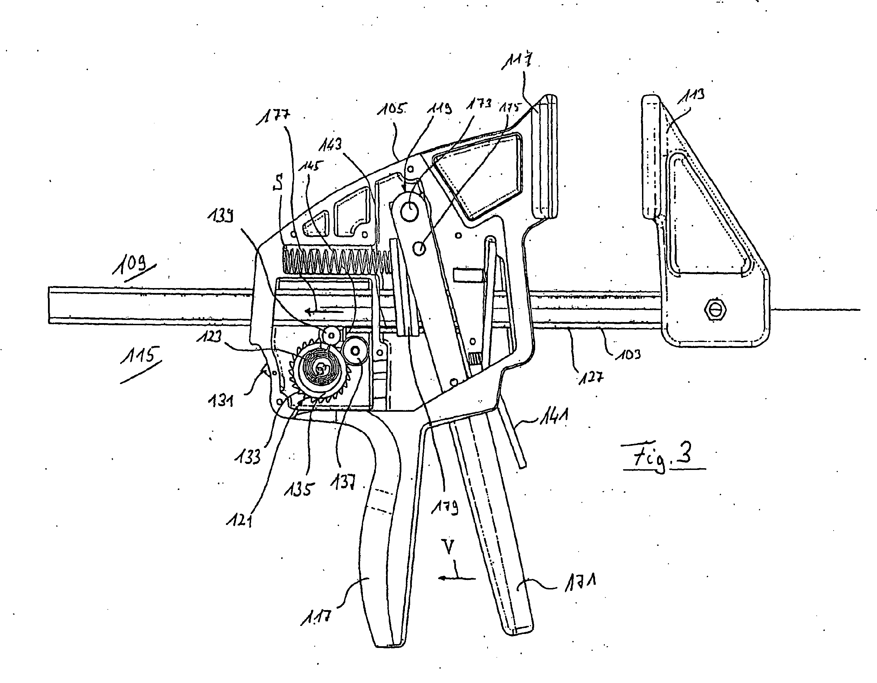

Die Ausführung gemäß den Figuren 2 und 3 stellt ein Spann- und/oder Spreizwerkzeug dar, die sich im wesentlichen von dem Spann- und/oder Spreizwerkzeug gemäß Figur 1a und 1b darin unterscheidet, daß eine alternative Ausführung eines erfindungsgemäßen Antriebs für das Spann- und/oder Spreizwerkzeug vorgesehen ist. Zur besseren Lesbarkeit der Figurenbeschreibung werden für identische und ähnliche Bauteile zur Ausführung gemäß den Figuren 1a und 1b identische Bezugszeichen verwendet, die um 100 erhöht sind, wobei es einer erneuten Erläuterung der Funktionsweise der Bauteile nicht bedarf.

Die Figuren 2 und 3 zeigen zwei unterschiedliche Antriebskonfigurationen eines Getriebes eines erfindungsgemäßen Antriebs. In beiden Konfigurationen ist der Antrieb durch eine Freistellung einer Klinke 131 aus einer Klinkenverzahnung 133 aktiviert.

Bei der Getriebekonfiguration gemäß Figur 2 wird ein Öffnen der Spannbacken 111 und 113 realisiert. Die Öffnungsrichtung der Verlagerung der Schub- und/oder Zugstange 103 ist mit O angedeutet.

Der erfindungsgemäße Antrieb 121 umfaßt ein drehantreibbares Getriebeelement, das als Antriebsrad 135 über eine Drehfeder 123 angetrieben ist. Die Drehfeder 123 ist derart montiert, daß eine Drehung des Antriebsrads 135 im Uhrzeigersinn bewirkt wird.

Ein mit dem Antriebsrad 135 drehmomentübertragend gekoppeltes Zwischengetrieberad 137 wird entgegen dem Uhrzeigersinn durch das Antriebsrad 135 gedreht, wobei das Zwischengetrieberad 137 drehmomentübertragend ein als Getriebebauteil zum Umsetzen einer Drehbewegung in eine translatorische Bewegung ausgebildetes Abtriebsrad 139 antreibt. Das Abtriebsrad 139 kommt mit dem der Betätigungsseite 115 zugewandten Rand 127 der Schub-oder Zugstange 103 kraftübertragend in Eingriff. Da das Abtriebsrad 139 in einer Drehbewegung im Uhrzeigersinn angetrieben ist, wird der Schub- oder Zugstange 103 eine Translationszugkraft mitgeteilt, welche die bewegliche Backe 113 in Öffnungsrichtung O von der ortsfesten Backe 111 entfernen läßt.

Sämtliche Drehmomentübertragungen können entweder durch Reibschluß oder durch Formschluß in Form von Verzahnungen oder durch eine Kombination aus beiden realisiert werden.

Im Anschluß wird nun eine Ausführung erläutert, die einen Mechanismus zum Wechseln der Verlagerungsrichtung von einer Öffnungsverlagerung, wie in Figur 2 dargestellt ist, in eine Schließverlagerung und umgekehrt betrifft, welcher Betriebsmodus in Figur 3 dargestellt ist.

Der Mechanismus zum Wechseln der Verlagerungsrichtung weist eine Schaltung auf, welche durch eine Rückdrücksperre betätigbar ist. Die Rückdrücksperre stellt eine Blockade gegen das Verlagern der Schub- oder Zugstange entgegen der Vorschubrichtung des Schrittgetriebes dar, die durch den Pfeil V angedeutet ist. Die Sperrwirkung der Rückdrücksperre wird durch die Verkantung eines Durchgangsbereichs eines Freigabehebels 141 mit der Schub- oder Zugstange 103 bewerkstelligt.

Soll also die Schub- oder Zugstange 103 in Öffnungsrichtung O (Figur 2), die der Vorschubrichtung V des Schrittgetriebes 119 entgegengesetzt ist, verlagert werden, so ist zum einen der Freigabehebel 141 zu betätigen, um die in Öffnungsrichtung O wirkende Sperrwirkung des Freigabehebels 141, die aufgrund der Verkantung des Freigabehebels 141 mit der Schub- oder Zugstange 103 besteht, zu lösen. Die Betätigung des Freigabehebels 141 ist in Figur 2 nicht näher dargestellt. Es reicht ein leichtes Kippen des Freigabehebels 141, um die Sperrwirkung in Öffnungsrichtung O aufzuheben.

Soll nun die Verlagerungsrichtung von O nach S gewechselt werden, ist der Freigabehebel 141 derart stark zu drücken (Figur 3), daß eine Schalteinrichtung aktiviert wird, die durch einen in seiner Längsrichtung verlagerbaren Druckstab 143 gebildet ist, der auf ein Lager 145 für das Abtriebsrad 139 drückt. Das Lager 145 gewährleistet eine Verschiebung des Abtriebsrads 139 in Längsrichtung, nämlich in Schließrichtung S, der Schub- oder Zugstange 103. Eine nicht dargestellte Vorspannung, insbesondere eine Druckfeder, für das Lager drückt das Abtriebsrad 139 in die in Figur 2 dargestellte Position, in der Abtriebsrad 139 mit dem Zwischengetrieberad 137 in Eingriff steht.

Bei Betätigung des Druckstabs 143, also bei Aktivierung der Schaltung, wird das Lager 145 des Abtriebsrads 139 derart verschoben, daß das Abtriebsrad 139 von dem Zwischengetrieberad 137 freikommt und in einen unmittelbaren drehmomentübertragenden Kontakt mit dem Antriebsrad 135 gelangt. Mit diesem strukturellen Aufbau ist ein Drehrichtungswechsler in dem Antrieb integriert, der einen Wechsel der Drehrichtung des Abtriebsrads 139 realisiert. Im geschalteten Zustand (Figur 3) treibt die Drehbewegung des von der Drehfeder 123 angetriebenen Antriebsrads 135 das Abtriebsrad 139 entgegen dem Uhrzeigersinn an, wodurch die Schub- oder Zugstange 103 in Schließrichtung S kontinuierlich verlagert wird.

In beiden in den Figuren 2 und 3 dargestellten Getriebekonfigurationen sind Antriebsrad, Zwischengetrieberad und Abtriebsrad an ihren Drehmomentübertragungspunkten derart vorgespannt, daß eine ausreichende Normalkraft zur Bildung der erforderlichen Reibungskraft zur Drehmomentübertragung erzeugt ist. Die erforderliche Andrückkraft des Abtriebsrads 139 gegen die Schub- oder Zugstange 103 wird bei dem Öffnungsmechanismus gemäß Figur 2 aufgrund der Vorspannung des Lagers 143 sichergestellt, wobei die erforderliche Andruckkraft im Schließmechanismus gemäß Figur 3 durch die dem Druckstab 143 an dem Freigabehebel 141 mitgeteilte Betätigungskraft gewährleistet ist.

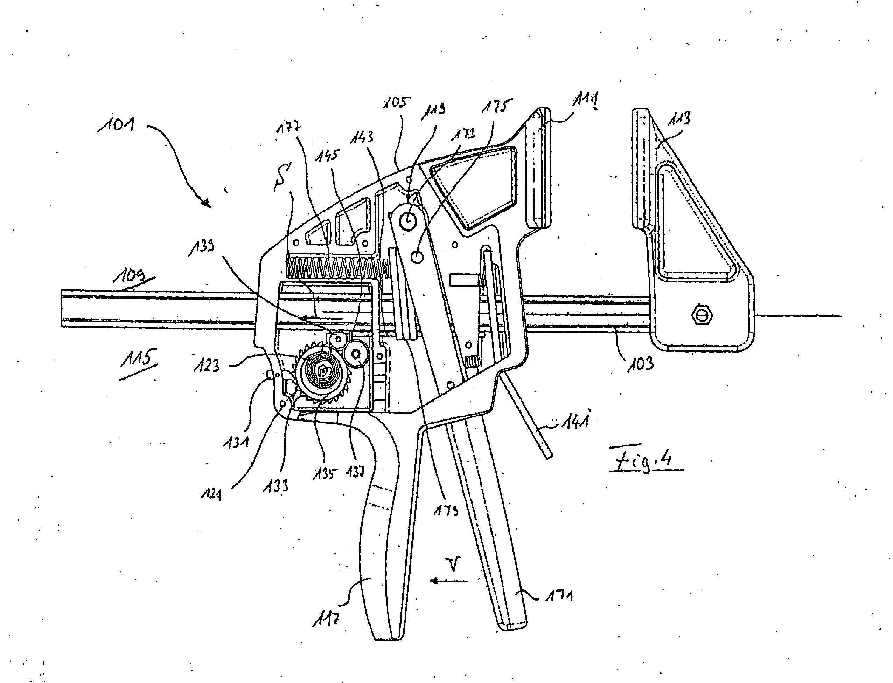

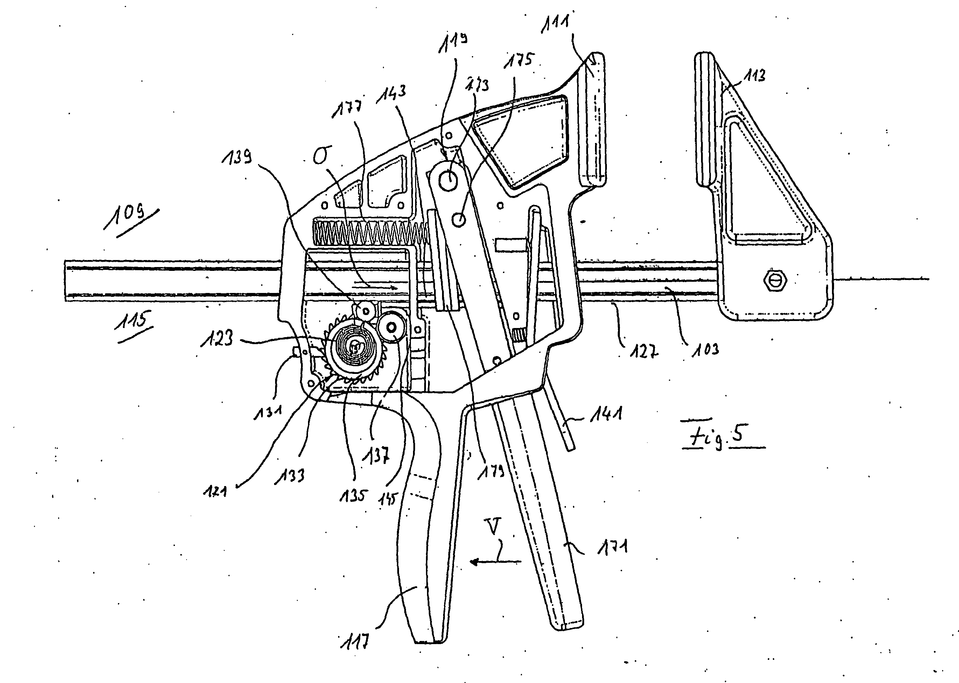

In den Figuren 4 und 5 ist ein Spann- und/oder Spreizwerkzeug 101 dargestellt, das im Hinblick auf den strukturellen Aufbau des Spann und/oder Spreizwerkzeugs gemäß den Figuren 2 und 3 im wesentlichen identisch ist. Zur besseren Lesbarkeit der Figurenbeschreibung werden identische Bezugszeichen für identische oder ähnliche Bauteile verwendet. Einer erneuten Erläuterung der identischen oder ähnlichen Bauteile bedarf es nicht.

Das Spann- und/oder Spreizwerkzeug 101 gemäß den Figuren 4 und 5 unterscheidet sich in dem Betriebszustand des Antriebs gegenüber dem Spann- und/oder Spreizwerkzeug gemäß den Figuren 2 und 3. Der Antrieb ist nämlich durch die Sperrklinke 131 deaktiviert, die in einer an dem Antriebsrad 135 radial außen liegenden Verzahnung 133 eingerastet ist und somit die Freigabe der in der Drehfeder 123 gespeicherten Drehantriebsenergie blockiert.

In diesem Betriebsmodus wird der Drehfeder 123 die zum Schließen und Öffnen notwendige Drehantriebsenergie zugeführt. Durch die Bewegung der Schub- oder Zugstange 103 wird über das zwischen der Schub- oder Zugstange 103 und der Drehfeder 123 angeordnete Getriebe eine Drehbewegung am Antriebsrad 135 entgegen dem Uhrzeigersinn induziert, wodurch die Drehfeder 123 gespannt wird.

Mit Hilfe des oben beschriebenen Mechanismus zum Wechseln der Verlagerungsrichtung kann der Spannvorgang unabhängig von einer bestimmten Verlagerungsrichtung der Schub-oder Zugstange realisiert werden.

In Figur 4 ist der Lademechanismus in einer Betriebskonstellation dargestellt, bei der ein Spannen der Drehfeder 123 durch Schließen der Backen 111, 113 realisiert ist. Bei der Bewegung der Schub- oder Zugstange 103 von rechts nach links, also in Schließrichtung S, wird dem Abtriebrad 139 eine Drehbewegung entgegen dem Uhrzeigersinn induziert, wobei dem Zwischengetrieberad 137 eine Drehbewegung in dem Uhrzeigersinn mitgeteilt wird. Durch Drehung des Antriebsrads 135 entgegen dem Uhrzeigersinn wird die Drehfeder 123 gegen den Uhrzeigersinn gespannt oder aufgezogen.

Da ohnehin zum Öffnen der Spannbacken, also für eine Bewegung der Schub- oder Zugstange von links nach rechts, die Rückdrücksperre durch den Freigabehebel 141 betätigt werden muß, ist bei vollständiger Betätigung des Freigabehebels 141 automatisch sichergestellt, daß über den Druckstab 143 der Drehrichtungswechsler aktiviert ist und das Abtriebsrad 139 aus dem Eingriff mit dem Zwischengetrieberad befreit ist.

Auf diese Weise ist es mit dem Antrieb möglich, ein Laden von potentieller Energie in den Speicher für Antriebsenergie bereitzustellen, wobei ein Ladevorgang sowohl beim Öffnen als auch beim Schließen durchführbar ist. Wird also die bewegliche Backe auf die ortsfeste Backe mittels des Schrittgetriebes zubewegt, wird automatisch die Drehfeder des Antriebs gespannt. Ein Aufladen durch Hin- und Herbewegen der Schub- oder Zugstange ist möglich.

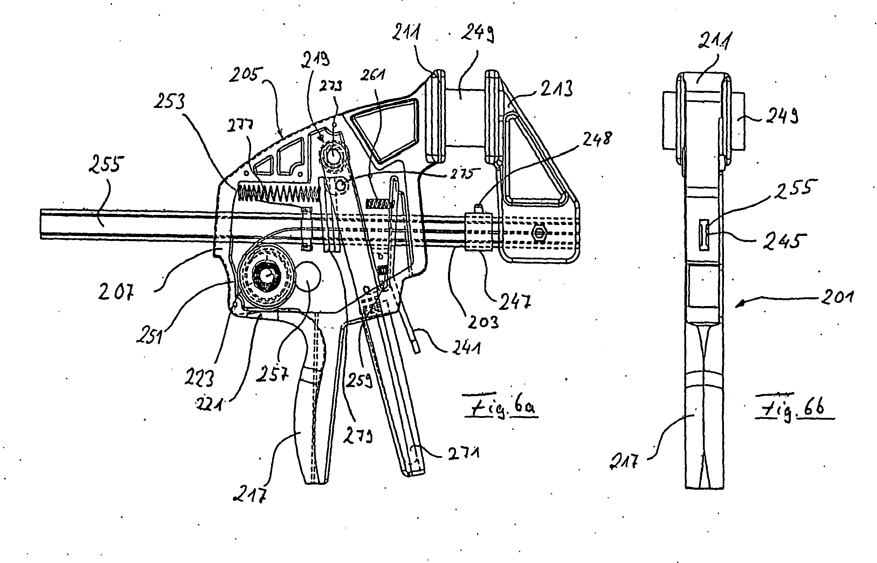

In den Figuren 6a, 6b, 7a, 7b, 8a und 8b ist eine weitere Ausführung eines Spann- und/oder Spreizwerkzeugs mit einer alternativen Ausführung eines Antriebs zur kontinuierlichen Verlagerung einer Schub- oder Zugstange dargestellt. Zur besseren Lesbarkeit sind identische oder ähnliche Bauteile zu den vorstehenden Ausführungen mit der gleichen Bezugsziffer versehen, die um 100 oder 200 erhöht ist. Einer erneuten Erläuterung der identischen oder ähnlichen Bauteile wie deren Funktionsweise bedarf es nicht.

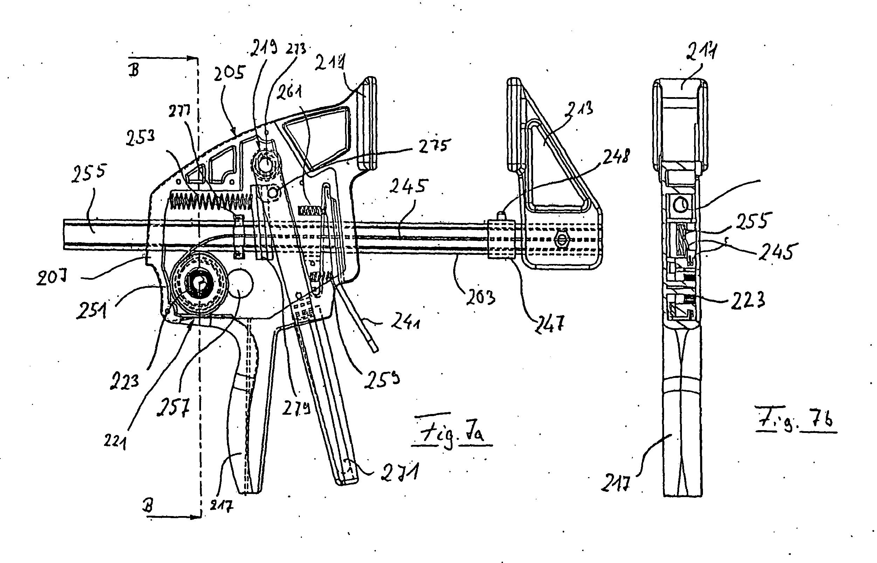

Die Ausführung gemäß den Figuren 6a bis 8b unterscheidet sich von den oben stehenden Ausführungen in der Ausgestaltung des Antriebs. Eine Einrichtung zum Ziehen der Schub-oder Zugstange von einer offenen Stellung, wie sie in den Figuren 7a dargestellt ist, in eine geschlossenen Stellung, wie sie in Figur 6a dargestellt ist, ist vorgesehen. Die Zugeinrichtung ist bei der Ausführung gemäß den Figuren 6a bis 8b durch eine Drehfeder 223 gebildet, die mit einem wickelbaren Strang 245 gekoppelt ist. Der wickelbare Strang 245 ist an seinem freien Ende an der Schub- oder Zugstange 203 befestigt. Hierfür ist eine Befestigungseinrichtung 247 vorgesehen, welche über einen Freigabeknopf 248 von der Schub- oder Zugstange 203 lösbar ist, um die Befestigungseinrichtung 247 des wickelbaren Strangs 245 längs der Schub- oder Zugstange 203 umsetzen zu können. Beispielsweise bei Spann- und/oder Spreizwerkzeugen für besonders breite Gegenstände 249 ist eine sehr lange Schub- oder Zugstange (hier nicht dargestellt) vorgesehen. Um nicht eine ebenso lange Zugeinrichtung einsetzen zu müssen, kann die Befestigungseinrichtung 247 näher zum Träger 205 gerückt werden.

Für den wickelbaren Strang 245 ist eine Spule 251 vorgesehen, auf die der wickelbare Strang 245 beim Zuziehen der Spannbacke 213 wickelbar ist. Der Wickelstrang 245 erstreckt sich von der Spule 251 über eine in der Nähe der Spule in Richtung auf die bewegliche Backe 213 versetzte Führung 253, welche den Wickelstrang 245 in eine Vertiefung 255 der Schub- oder Zugstange 203 leitet. Von der Führung 253 läuft der Wickelstrang 245 längs der Schub- oder Zugstange 203 in deren Vertiefung 255 zur Befestigungseinrichtung 247.

Der Wickelstrang 245 kann als Faden oder als ein metallisch verstärkter Stoffaden gebildet sein. Auch Nylonschnüre mit kleinem Querschnitt sind als Wickelstrang einsetzbar.

Die Schub- oder Zugstange 203 mit der Vertiefung 255 zur Aufnahme des Wickelstrangs 245 ist, wie in Figur 7b ersichtlich ist, als I-Träger mit zwei seitlichen Vertiefungen 255 ausgeführt. Die Vertiefungen sind derart bemessen, daß der Wickelstrang berührungsfrei hinsichtlich des Gehäuses 207 des Trägers 205 entlanggleiten kann.

Eine besondere erfinderische Maßnahme besteht darin, der drehbar gelagerten Spule 251, die mit der Drehfeder 223 drehantreibend gekoppelt ist, eine Dämpfungseinrichtung 257 zuzuordnen, die schematisch in den Figuren 6a, 7a und 8a angedeutet ist.

Die Dämpfungseinrichtung 257 ist dazu ausgelegt, die durch die Zugkraft der Zugeinrichtung auf die bewegliche Backe 213 wirkende Kraft derart zu dämpfen, daß eine kontrollierbare Schließgeschwindigkeit der beweglichen Backe 213 gewährleistet ist. Die gewünschte Schließgeschwindigkeit hängt von den Wünschen der das Spann- und/oder Spreizwerkzeug 201 benutzenden Personen ab. Die Dämpfungseinrichtung 257 kann auf einem Reibungsverlust- oder Pantschverlustprinzip eines Arbeitsfluids basieren.

Die Dämpfungseinrichtung 257 ist insbesondere vorteilhaft, sollte eine Drehfeder verwendet werden, welche eine nicht lineare Kraftbereitstellung bietet. Die Dämpfungseinrichtung 257 kann derart auf die Drehfeder abgestimmt sein, daß eine lineare Kraftvermittlung erzielt wird.

In dem in den Figuren 6a bis 8b gezeigten Antrieb ist ein Mechanismus zum Speichern und Laden von Energie durch die Drehfeder realisiert. Den niedrigsten Niveauwert im Speicher enthält die Drehfeder 223 dann, wenn die Spannbacken 211 und 213 geschlossen sind. Durch Wegziehen der Spannbacke 213 von der ortsfesten Backe 211 bei leichter Betätigung des Freigabehebels 241 der Rückdrücksperre zum Lösen des Spann-und/oder Spreizwerkzeugs wird die Drehfeder 223 über den Wickelstrang 245 gespannt. Bei Freigabe des Freigabehebels 241 verbringen Federn 259 und 261 den Freigabehebel 241 in eine gegenüber der Schub- oder Zugstange 203 verkantete Stellung. Die in der verkanteten Stellung auftretenden Reibungs- und Verkantungskräfte sind derart groß, daß ein selbständiges Schließen der Spannbacke 213 durch die Zugeinrichtung nicht möglich ist. Die dafür erforderliche Reibungs- oder Verkantkraft an dem Freigabehebel 241 kann unter Berücksichtigung der Federkonstanten der Federn 259 und 261 eingestellt werden.

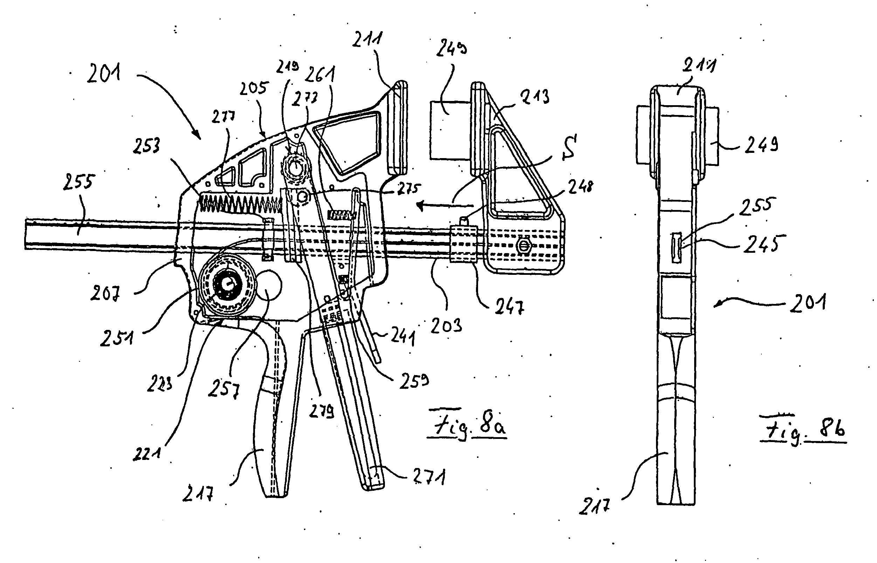

Betätigt die Bedienperson den Freigabehebel 241, so werden die Reibungs- oder Verkantungskräfte an der Schub- oder Zugstange gelöst, wodurch die Drehantriebsenergie in der Drehfeder 223 freigegeben wird und die bewegliche Backe über den Wickelstrang 245 zur ortsfesten Backe 211 hin gezogen wird. Der Betriebszustand des Schließens ist in den Figuren 8a und 8b dargestellt. Die Zugeinrichtung wirkt so lange, bis der Gegenstand 249 von den Backen 211, 213 ergriffen ist (Figur 6a, 6b) und die Zugkraft der Drehfeder 223 nicht mehr ausreicht, ein weiteres Verlagern der Schub- oder Zugstange 203 in Schließrichtung S zu bewirken.

Nach dem Beenden des Schnellschließvorgangs durch die Zugeinrichtung können über das Schrittgetriebe 219 dem Gegenstand 249 hohe Spannkräfte mitgeteilt werden, welches Schrittgetriebe kleiner Schrittweite später detaillierter beschrieben wird.

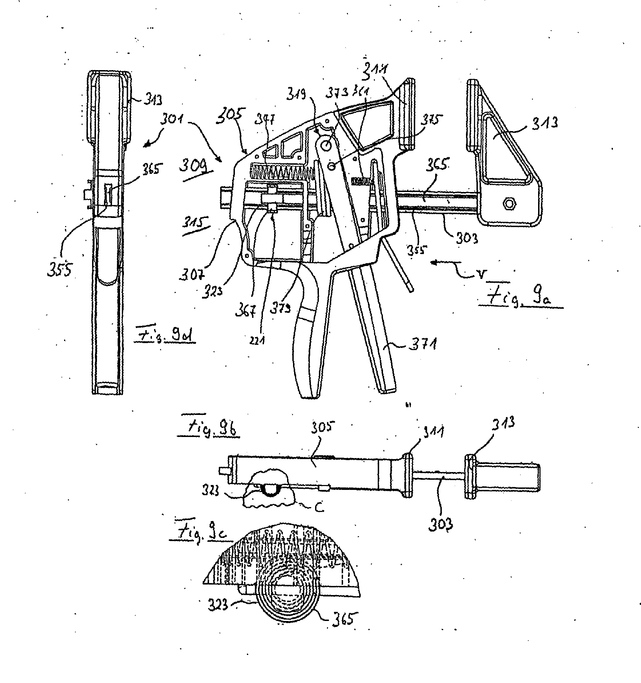

In den Figuren 9a bis 9d ist ein weiteres erfindungsgemäßes Spann- und/oder Spreizwerkzeug gezeigt, wobei zur besseren Lesbarkeit der Figurenbeschreibung für identische oder ähnliche Bauteile die gleichen Bezugsziffern verwendet werden, die um 100, 200 oder 300 erhöht sind, wobei es einer erneuten Erläuterung der identischen oder ähnliche Bauteile nicht bedarf.

Die Ausführung des Spann- und/oder Spreizwerkzeugs 301 gemäß den Figuren 9a bis 9d unterscheidet sich von der Ausführung des Spann- und/oder Spreizwerkzeugs gemäß den Figuren 6a bis 8b darin, daß die Einrichtung zum Ziehen der beweglichen Backe 313 auf die ortsfeste Backe 311 ausschließlich mit einer Drehfeder 323 bewerkstelligt wird, d.h. ohne Nutzung eines Wickelstranges, welcher die Drehfeder mit der Schub- oder Zugstange 303 oder der beweglichen Backe 313 verbindet.

Die Drehfeder 323 gemäß der Ausführung der Figuren 9a bis 9d ist eine Spiralbandfeder, welche drehbar im Gehäuse 207 des Trägers 205 gelagert ist. Zur Speicherung der Drehantriebsenergie kann die Spiralbandfeder abgewickelt werden, wobei der abgewickelte Abschnitt 365 in der Vertiefung 355 der Schub- oder Zugstange aufgenommen ist. Die Basis 367 der Spiralbandfeder ist zum Aufwickeln des abgewickelten Spiralbandabschnitts 365 drehbar am Träger 305 gelagert. Das freie Ende des abwickelbaren Spiralbandabschnitts 365 ist an der Schub- oder Zugstange 303 oder an der beweglichen Backe 313 befestigt. Die hierfür notwendige Befestigungseinrichtung (hier nicht dargestellt) für den Spiralbandabschnitt 365 ist lösbar, wobei die Befestigungseinrichtung längs der Schub- oder Zugstange 303 umsetzbar ist, insbesondere um bei großen zu spannenden Gegenständen (hier nicht näher dargestellt) kein zu starkes Abwickeln der Spiralbandfeder zu bedingen.

Der besondere Vorteil der Spiralbandfeder liegt darin, eine unabhängig vom zurückgelegten Weg gleichmäßige lineare Antriebskraft der beweglichen Backe 313 oder der Schub- oder Zugstange 303 mitzuteilen.

Somit erfüllt die Spiralbandfeder sowohl die Aufgabe einer Zugeinrichtung als auch die einer Dämpfungseinrichtung zum Erzeugen gleichmäßiger Schließgeschwindigkeiten.

Zur Aufnahme der mit dem Spiralbandabschnitt 365 gewickelten Spiralbandbasis 367 kann das Gehäuse 307 eine seitliche Öffnung aufweisen, durch welche die Basis 367 samt gewikkeltem Spiralbandabschnitt 365 ragen kann, was in den Figuren 9b und 9c dargestellt ist.

Der Schließbetriebsmodus sowie die Bedienung des Spann- und/oder Spreizwerkzeugs 303 mit der Spiralbandfeder entspricht im wesentlichen dem Spann- und/oder Spreizwerkzeug 203, das gemäß den Figuren 6a bis 8b anhand der dort verwendeten Zugeinrichtung mit Wikkelstrang beschrieben ist.

Auch die beiden in den Figuren 6a bis 8b und 9a bis 9d beschriebenen Spann- und/oder Spreizwerkzeugausführungen können mit einem nicht näher dargestellten Mechanismus zum Laden eines Energiespeichers beim Schließen der Einhandzwinge versehen sein. Diese Kombination von Lademechanismen ist insbesondere dann erforderlich, wenn auch ein zusätzlicher Antrieb in den Spannwerkzeugen gemäß den Figuren 6a bis 8b und 9a bis 9d integriert ist, um insbesondere eine Verlagerung der Schub- oder Zugstange in beiden Längsrichtungen vorentziehen zu können.

Nach der durch die Spiralbandfeder bewirkte Schließbewegung der beweglichen Backe 313 kann mittels des Schrittgetriebes 319 kleiner Schrittweite die gewünschte hohe Spannkraft zwischen den Backen 311 und 313 aufgebaut werden.

Im folgenden wird der Aufbau sowie die Funktionsweise des Schrittgetriebes kleiner Schrittweiten beschrieben, welches Schrittgetriebe im wesentlichen dem entspricht, das in der deutschen Patentanmeldung DE 10335365.8 von der Anmelderin angegeben wird.

Das Schrittgetriebe 19 bis 319 ist dazu ausgelegt, einen Kraftbetrieb des Spann- und/oder Spreizwerkzeugs 1 bis 301 bereitzustellen, bei dem die Schub- oder Zugstange 3 bis 303 in Vorschubrichtung V mit kleinen Schrittweiten verlagerbar ist. In diesem Kraftbetrieb ist ein Wirkhebel eines Antriebsarms 71 bis 371 wirksam, welcher Wirkhebel durch den Abstand eines Schwenklagers 73 bis 373 des Antriebsarms 71 bis 371 und eines Krafteintragsbolzens 75 bis 375 definiert ist. Da der Betätigungshebel des Antriebsarms 71 bis 371 weit größer ist als der Wirkhebel, können Spannkräfte erzeugt werden, die um das 10-fache höher sind als die, die mit dem Schrittgetriebe gemäß dem US-Patent 6,568,667 möglich sind.

Durch eine im Gehäuse 307 gelagerte Druckfeder 77 bis 377 wird ein Mitnahmeschieber 79 bis 379 stets an den Krafteintragsbolzen 75 bis 375 des Antriebsarms 71 bis 371 gedrückt. Weiterhin dient die Druckfeder 77 bis 377 dazu, den Mitnahmeschieber 79 bis 379 in eine stets gegenüber der Schub- oder Zugstange 3 bis 303 verkanteten Stellung zu bringen. Dies wird dadurch erreicht, daß die Druckkrafteintragsstelle der Druckfeder 77 bis 377 näher zur Schub- oder Zugstange 3 bis 303 liegt als der Krafteintragsbolzen 75 bis 375, wodurch der Mitnahmeschieber 79 bis 379 um den Krafteintragsbolzen 75 bis 375 gegen den Uhrzeigersinn geschwenkt wird, bis der Mitnahmeschieber 79 bis 379 mit der Schub- oder Zugstange 3 bis 303 verkantet. Damit ist gewährleistet, daß bei Betätigung des Antriebsarms 71 bis 371 in einer Schwenkbewegung um das Schwenklager 73 bis 373 unmittelbar eine Verlagerung der Schub- oder Zugstange bewirkt wird, womit unmittelbar Spannkräfte zwischen den Spannbacken 13, 15 bis 313, 315 hervorgerufen werden können. Nach einem Hub des Antriebsarms 71 bis 371 ist letzterer von der Bedienperson freizugeben, wodurch die Druckfeder 77 bis 377 die Mitnehmerverkantung des Mitnahmeschiebers 79 bis 379 gegenüber der Schub- oder Zugstange 3 bis 303 freigibt und der Antriebsarm 71 bis 371 in die in der Figur 9a beispielsweise dargestellte Ausgangsstellung zurückgeführt ist.

Die günstigen Hebelverhältnisse für das Schrittgetriebe kleiner Schrittweite wird vor allem dadurch realisiert, daß sowohl das Schwenklager 73 bis 373 als auch der Krafteintragsbolzen 375 auf der Spannseite 9 bis 309 liegen.

Zum Beispiel ist es denkbar, die Dämpfungseinrichtung (257) mit Drehfederantrieben, wie in den Figuren 1a und 1b oder 2 bis 5 dargestellt, zu kombinieren.

## Patentansprüche

1. Spreiz und/oder Spannwerkzeug mit einem Antrieb zur kontinuierlichen Verlagerung einer Schub- oder Zugstange (303) des Spann- und/oder Spreizwerkzeugs (301) relativ zu einem eine ortsfeste Backe haltenden Träger (305) des Spann- und/oder Spreizwerkzeugs (301) in Längsrichtung der Schub- oder Zugstange (303), an der eine bewegliche Backe fest angebracht ist, einer Aktivierungseinrichtung, bei deren Betätigung der Antrieb die Schub- oder Zugstange (303) verlagert, und einem Schrittgetriebe (219, 319), das von einer Bedienperson unabhängig von dem Antrieb durch Betätigung eines Antriebsarms betreibbar ist, der über einen gegen eine Rückstellfeder verlagerbaren Mitnehmer hebelkraftübertragungsgemäß mit der Schuboder Zugstange (203, 303) in Eingriff bringbar ist, **dadurch gekennzeichnet, dass** der Antrieb eine Einrichtung zum Erzeugen einer Zugkraft zwischen der Schuboder Zugstange (303) und dem Träger (305) aufweist, die Einrichtung zur Erzeugung einer Zugkraft eine gewickelte Spiralbandfeder ist und einen Wicklungsträger aufweist, der drehbar an dem Träger (305) gelagert ist, und dass ein abgewickeltes Band der Spiralbandfeder, zumindest teilweise in einer Aufnahme oder Vertiefung (255, 355) der Schub- oder Zugstange (303) liegt.

2. Spreiz und/oder Spannwerkzeug nach Anspruch 1, **dadurch gekennzeichnet, dass** die Einrichtung zur Erzeugung einer Zugkraft mit einem wickelbaren Kraftübertragungselement verbunden ist.

3. Spreiz- und/oder Spannwerkzeug nach einem der Ansprüche 1 bis 2 **dadurch gekennzeichnet, dass** die Schub- oder Zugstange (303) die Form eines I-Trägers aufweist.

4. Spreiz- und/oder Spannwerkzeug nach einem der Ansprüche 1 bis 3, **dadurch gekennzeichnet, dass** eine Dämpfungseinrichtung auf die Spiralbandfeder des Antriebs insbesondere für eine gleichmäßige Verlagerungsgeschwindigkeit an jeder Stelle des Verlagerungsweges abgestimmt ist.

5. Spreiz- und/oder Spannwerkzeug nach Anspruch 4, **dadurch gekennzeichnet, dass** die Dämpfungseinrichtung und die Spiralbandfeder in einer Baueinheit, insbesondere in einem Bauteil, kombiniert sind.

6. Spreiz- und/oder Spannwerkzeug nach Anspruch 4 oder 5, **dadurch gekennzeichnet, dass** die Dämpfungseinrichtung eine Kolbenzylinder-Anordnung mit einem Dämpfungsfluid aufweist, wobei insbesondere der Kolben der Dämpfungseinrichtung mit der Schub- oder Zugstange verbunden ist und insbesondere der Zylinder der Dämpfungseinrichtung mit dem Träger verbunden ist.

7. Spreiz- und/oder Spannwerkzeug nach einem der Ansprüche 4 bis 6, **dadurch gekennzeichnet, dass** die Dämpfungseinrichtung auf ein drehantreibbares Getriebeelement betriebsmäßig wirkt.

8. Spreiz- und/oder Spannwerkzeug nach Anspruch 7, **dadurch gekennzeichnet, dass** die Dämpfungseinrichtung Reibungsverluste, insbesondere Pauschverluste, erzeugt, wobei insbesondere die Dämpfungseinrichtung eine Dämpfungsflüssigkeit aufweist, in der ein drehantreibbares Dämpfungsteil arbeitet.

## Claims

1. A spreading and/or clamping tool having a drive for the continuous displacement of a push or pull rod (303) of the spreading and/or clamping tool (301) relative to a carrier (305), which holds a fixed jaw, of the spreading and/or clamping tool (301) in the longitudinal direction of the push or pull rod (303), on which a mobile jaw is fixedly attached, an activation unit, upon whose activation the drive displaces the push or pull rod (303), and an intermittent gear (219, 319), which is operable by an operator independently of the drive by actuating a drive arm, and which can be engaged via a tappet, which is displaceable against a restoring spring, with the push or pull rod (203, 303) to transmit lever force, **characterized in that** the drive has a unit for generating a traction force between the push or pull rod (303) and the carrier (305), the unit for generating a traction force is a coiled spiral flat spring, and has a winding carrier, which is mounted so it is rotatable on the carrier (305), and an unwound strip of the spiral flat spring at least partially lies in a receptacle or depression (255, 355) of the push or pull rod (303).

2. The spreading and/or clamping tool according to Claim 1, **characterized in that** the unit for generating a traction force is connected to a windable force transmission element.

3. The spreading and/or clamping tool according to one of Claims 1 through 2, **characterized in that** the push or pull rod (303) has the form of an I-beam.

4. The spreading and/or clamping tool according to one of Claims 1 through 3, **characterized in that** a damping unit on the spiral flat spring of the drive is adapted in particular for a uniform displacement velocity at every point of the displacement path.

5. The spreading and/or clamping tool according to Claim 4, **characterized in that** the damping unit and the spiral flat spring are combined in one module, in particular in one component.

6. The spreading and/or clamping tool according to Claim 4 or 5, **characterized in that** the damping unit has a piston-cylinder configuration having a damping fluid, in particular the piston of the damping unit being connected to the push or pull rod and in particular the cylinder of the damping unit being connected to the carrier.

7. The spreading and/or clamping tool according to one of Claims 4 through 6, **characterized in that** the damping unit acts in operation on a rotationally-drivable gearing element.

8. The spreading and/or clamping tool according to Claim 7, **characterized in that** the damping unit generates friction losses, in particular noise losses, the damping unit in particular having a damping liquid, in which a rotationally-drivable damping part operates.

## Revendications

1. Outil d'écartement et/ou de serrage avec un entraînement pour le déplacement en continu d'une barre de poussée ou de traction (303) de l'outil d'écartement et/ou de serrage (301) par rapport à un support (305) maintenant une mâchoire en position fixe de l'outil d'écartement et/ou de serrage (301) dans la direction longitudinale de la barre de poussée ou de traction (303) sur laquelle une mâchoire mobile est placée de manière fixe, un dispositif d'activation à l'actionnement duquel l'entraînement déplace la barre de poussée ou de traction (303), et un mécanisme pas à pas (219, 319) qui peut être actionné par un opérateur indépendamment de l'entraînement en actionnant un bras d'entraînement qui peut être amené en prise avec la barre de poussée ou de traction (203, 303) par un élément d'entraînement déplaçable contre un ressort de rappel par transmission de force de levier, **caractérisé en ce que** l'entraînement présente un dispositif pour produire une force de traction entre la barre de poussée ou de traction (303) et le support (305), le dispositif pour produire une force de traction est un ressort à bande spiralée enroulé et présente un support d'enroulement placé de manière rotative sur le support (305) et qu'une bande déroulée du ressort à bande spiralée repose au moins partiellement dans une réception ou un évidement (255, 355) de la barre de poussée ou de traction (303).

2. Outil d'écartement et/ou de serrage selon la revendication 1, **caractérisé en ce que** le dispositif pour produire une force de traction est relié à un élément de transmission de force pouvant être enroulé.

3. Outil d'écartement et/ou de serrage selon l'une des revendications 1 à 2, **caractérisé en ce que** la barre de poussée ou de traction (303) a la forme d'une poutre en I.

4. Outil d'écartement et/ou de serrage selon l'une des revendications 1 à 3, **caractérisé en ce qu'**un dispositif d'amortissement est défini sur le ressort à bande spiralée de l'entraînement, en particulier pour une vitesse de déplacement régulière en chaque endroit du trajet de déplacement.

5. Outil d'écartement et/ou de serrage selon la revendication 4, **caractérisé en ce que** le dispositif d'amortissement et le ressort à bande spiralée sont combinés dans un module, particulièrement dans une pièce.

6. Outil d'écartement et/ou de serrage selon la revendication 4 ou 5, **caractérisé en ce que** le dispositif d'amortissement présente un agencement de vérin à piston avec un fluide d'amortissement, sachant particulièrement que le piston du dispositif d'amortissement est relié à la barre de poussée ou de traction et particulièrement que le vérin du dispositif d'amortissement est relié au support.

7. Outil d'écartement et/ou de serrage selon l'une des revendications 4 à 6, **caractérisé en ce que** le dispositif d'amortissement peut être entraîné sur un élément d'engrenage pouvant être entraîné par rotation.

8. Outil d'écartement et/ou de serrage selon la revendication 7, **caractérisé en ce que** le dispositif d'amortissement produit des pertes par friction, en particulier des pertes globales, sachant qu'en particulier le dispositif d'amortissement a un fluide d'amortissement dans lequel
